# FASCICULE DE BREVET EUROPEEN

(11) **EP 0 322 307 B1**
(45) Date de publication et mention de la délivrance du brevet: **21.04.1993**
(21) Numéro de dépôt: 88403257.4
(22) Date de dépôt: 21.12.1988
(51) Int. Cl.: G06K 15/22, B43L 13/02

(54) **Procédé et dispositif pour le changement d'outil d'écriture dans une machine graphique**
Verfahren und Vorrichtung zum Wechseln des Schreibwerkzeuges in einer Zeichenmaschine
Process and device for changing the writing instrument in a drawing machine

(30) Priorité: 22.12.1987 FR 8717940
(43) Date de publication de la demande: 28.06.1989
(73) Titulaire: Océ Graphics France S.A., 94000 Créteil (FR)
(72) Inventeur: Farlotti, Laurent A., F-94700 Maisons-Alfort (FR)
(74) Mandataire: Hanneman, Henri W., Dr.

(56) Documents cités:
- DE-A- 2 755 586
- GB-A- 2 082 510
- GB-A- 2 115 565
- US-A- 4 677 572

## Description

La présente invention concerne les machines graphiques et, plus particulièrement, des procédés et dispositifs permettant le changement automatique d'outil d'écriture dans les machines graphiques comprenant un dispositif de stockage de type barillet ayant plusieurs logements pour le stockage des outils d'écriture.

Un domaine particulier d'application de l'invention est celui des machines à dessiner, ou traceurs, mais, d'une façon générale, l'invention est applicable à toute machine graphique du type comportant : une tête d'écriture munie de moyens de fixation d'un outil d'écriture amovible ; des moyens d'actionnement pour déplacer l'outil d'écriture porté par la tête d'écriture selon une première direction (Z) entre une position de travail, rapprochée d'un support d'impression et une position de repos, éloignée du support d'impression ; et des moyens de déplacement de la tête d'écriture selon une deuxième direction par rapport au support d'impression pour tracer sur celui-ci des motifs graphiques prédéterminés au moyen de l'outil d'écriture porté par la tête.

Dans une machine graphique et notamment une machine à dessiner de ce type, la tête d'écriture est généralement mobile en translation suivant une seule direction horizontale (Y) parallèlement au support d'impression, au moins dans la zone de travail de la tête d'écriture, tandis que le support d'impression est en prise avec des moyens d'entraînement pour être déplacé dans une autre direction horizontale (X) perpendiculaire à la direction (Y). Un tracé désiré est produit sur le support d'impression par une combinaison appropriée des mouvements, respectivement dans les directions X et Y, du support d'impression et de la tête d'écriture, portant un outil d'écriture en position de travail.

Dans d'autres traceurs, la tête d'écriture est montée mobile selon deux directions (X et Y) par rapport au support d'impression qui est fixe. Dans tous les cas, la tête d'écriture est mobile selon au moins une "deuxième" direction généralement perpendiculaire à la première direction (Z).

Des machines graphiques du type précité sont connues, dans lesquelles sont prévus des moyens permettant un changement automatique d'outil d'écriture. Le changement est réalisé en commandant le déplacement de la tête d'écriture jusqu'à une position de transfert d'outil d'écriture, au voisinage immédiat d'un dispositif de stockage où sont rangés plusieurs outils d'écriture. Le dispositif de stockage prend généralement la forme d'un magasin rotatif, ou barillet, à la périphérie duquel sont formés des logements capables de recevoir chacun un outil d'écriture.

Un dispositif de changement d'outil d'écriture dans une machine à dessiner est décrit dans la demande de brevet français No. 2 572 572. Dans ce dispositif connu, la tête d'écriture est munie de moyens exerçant sur le corps de l'outil d'écriture une première force d'attraction magnétique pour maintenir l'outil solidaire de la tête, tandis que le dispositif de stockage est muni de moyens exerçant une deuxième force magnétique pour maintenir dans leurs logements les outils d'écriture qui y sont stockés. L'intensité de l'une au moins des deux forces d'attraction magnétique peut être variée pour permettre le transfert d'un outil d'écriture de la tête d'écriture vers le dispositif de stockage, ou inversement, sous l'effet de la différence des forces d'attraction magnétique qui s'exercent sur l'outil.

Avec ce dispositif connu, la solidarisation de l'outil d'écriture avec la tête d'écriture ou avec le dispositif de stockage est donc réalisé sous l'effet d'une force magnétique en direction transversale par rapport aux mouvements d'abaissement et de relèvement de l'outil. Il en résulte une structure simplifiée par rapport à d'autres dispositifs connus de changement d'outils d'écriture dans lesquels la désolidarisation de l'outil de la tête ou du dispositif de stockage est provoquée par le déverrouillage de systèmes mécaniques sous l'effet du contact entre la tête et le dispositif de stockage.

Dans le dispositif de la demande de brevet français No. 2 572 572 précitée, un capuchon mobile est associé à chaque logement du dispositif de stockage pour protéger et enfermer la pointe de l'outil d'écriture monté dans le logement. Il est nécessaire de prévoir des moyens pour déplacer le capuchon afin de permettre le transfert d'un outil d'écriture dans le logement correspondant ou hors de celui-ci, ce qui est réalisé par un aimant fixe qui exerce une force d'attraction magnétique sur le capuchon du logement situé face à la tête d'écriture, en position de transfert.

Dans le dispositif de US-A-4 667 572 - Gunderson le transfert d'un outil d'écriture de la tête d'écriture vers le dispositif de stockage de type barillet, ou inversement, est effectué par une combinaison des mouvements rotatifs du dispositif de stockage et des mouvements de la tête d'écriture.

Dans DE-A-27 55 586 et GB-A-2 082 510 la tête d'écriture est montée mobile selon deux directions (X et Y) par rapport au support d'impression qui est fixe. Le dispositif de stockage prend la forme d'un magasin stationaire avec plusieurs logements.

L'invention a pour objet de proposer un procédé de transfert permettant une simplification du processus de transfert d'un outil d'écriture par rapport à l'art antérieur.

L'invention a aussi pour objet de proposer un procédé de transfert ne demandant pas d'adaptation particulière de la tête d'écriture.

L'invention a encore pour objet de proposer un procédé de transfert qui puisse être mis en oeuvre avec un dispositif de stockage d'outils dépourvu de pièces mobiles, donc un dispositif de stockage ayant une structure très simple et, par conséquent, un coût peu élevé.

Suivant le procédé conforme à l'invention, le transfert d'un outil d'écriture de la tête d'écriture au dispositif de stockage et son engagement dans un logement libre du dispositif de stockage, ainsi que le dégagement d'un outil d'écriture d'un logement du dispositif de stockage et son transfert à la tête d'écriture, sont réalisés chacun seulement par une combinaison d'un mouvement relatif selon la première direction (Z) entre le dispositif de stockage et l'outil d'écriture et d'au moins un déplacement selon la deuxième direction (Y) de la tête d'écriture.

Le transfert d'un outil d'écriture de la tête d'écriture à un logement libre du dispositif de stockage est réalisé par amenée en position de transfert de la tête d'écriture portant l'outil d'écriture, engagement de l'outil d'écriture dans le logement du dispositif de stockage par un mouvement relatif selon la première direction, et dégagement de l'outil d'écriture de la tête d'écriture par déplacement de celle-ci, selon la deuxième direction hors de la position de transfert.

Inversement, le transfert d'un outil d'écriture d'un logement du dispositif de stockage à la tête d'écriture est réalisé par engagement de l'outil d'écriture sur la tête d'écriture par amenée de celle-ci en position de transfert, dégagement de l'outil d'écriture de son logement du dispositif de stockage par un mouvement relatif selon la première direction, et déplacement de la tête d'écriture selon la deuxième direction hors de la position de transfert.

La liaison entre l'outil d'écriture et la tête d'écriture est réalisée par tous moyens, tels que des pinces élastiquement déformables ou un dispositif exerçant une force d'attraction magnétique, qui permettent un engagement de l'outil sur la tête par un mouvement de rapprochement mutuel et un dégagement par un mouvement inverse d'écartement de la tête par rapport à l'outil.

Un intérêt remarquable du procédé de transfert conforme à l'invention provient du fait que tout le processus de transfert d'un outil d'écriture de la tête d'écriture au dispositif de stockage, ou inversement, peut être exclusivement réalisé par une combinaison des mêmes mouvements que ceux nécessaires en phase d'impression au moyen de la machine, à savoir abaissement et relèvement de l'outil d'écriture et déplacement de la tête d'écriture sur sa trajectoire.

Aucune adaptation particulière de la tête d'écriture, ou aucune commande particulière de mouvement ou d'application d'une force n'est donc nécessaire pour la réalisation des opérations de changements d'outil d'écriture.

Suivant un mode particulier de réalisation de l'invention, l'engagement d'un outil d'écriture dans un logement du dispositif de stockage est réalisé par accrochage de l'outil d'écriture sur le dispositif de stockage, accrochage effectué par le mouvement d'abaissement d'outil. A cet effet, l'outil d'écriture, ou un porte-outil solidaire de celui-ci, présente à sa périphérie une partie en saillie susceptible de s'engager dans une partie de forme correspondante formée dans chaque logement du dispositif de stockage.

Avantageusement, l'insertion de la pointe de l'outil d'écriture dans un capuchon de protection associé à chaque logement du dispositif de stockage, et le retrait hors du capuchon sont réalisés par les mêmes mouvements d'abaissement ou de relèvement d'outils qui sont effectués pour engager l'outil d'écriture dans le logement du dispositif de stockage ou pour le dégager de ce logement.

Il n'est donc pas nécessaire de prévoir des capuchons mobiles et des moyens pour provoquer le déplacement des capuchons, de sorte que le dispositif de stockage peut être réalisé entièrement sans aucune partie mobile par rapport au reste du dispositif.

Suivant un autre de ses aspects, l'invention a aussi pour objet de proposer une machine graphique permettant la mise en oeuvre du procédé de changement d'outil d'écriture défini plus haut, et plus particulièrement une machine du type comportant : une tête d'écriture munie de moyens de fixation d'un outil d'écriture amovible ; des moyens d'actionnement pour déplacer l'outil d'écriture, porté par la tête d'écriture, selon une première direction entre une position de travail rapprochée d'un support d'impression et une position de repos, éloignée du support d'impression ; des moyens de déplacement de la tête d'écriture par rapport au support d'impression selon une deuxième direction pour tracer sur celui-ci des motifs graphiques prédéterminés au moyen de l'outil d'écriture porté par la tête ; et un dispositif de stockage d'outils d'écriture comportant des logements dans chacun desquels peut être stocké un outil d'écriture et agencé de manière à permettre le transfert d'un outil d'écriture entre un quelconque logement du dispositif de stockage et la tête d'écriture lorsque celle-ci est amenée dans une position de transfert adjacente audit logement.

Conformément à l'invention la machine graphique est munie de moyens pour réaliser le transfert d'un outil d'écriture de la tête d'écriture au dispositif de stockage et son engagement dans un logement libre du dispositif de stockage, ainsi que pour le dégagement d'un outil d'écriture d'un logement du dispositif de stockage et son transfert à la tête d'écriture chaque par seulement une combinaison d'un mouvement relatif selon la première direction entre le dispositif de stockage et l'outil d'écriture et déplacement selon la deuxième direction de la tête d'écriture.

Avantageusement, chaque logement du dispositif de stockage et chaque outil d'écriture sont respectivement munis d'un premier et d'un deuxième moyen d'accrochage adaptés à être engagés l'un dans l'autre par un mouvement relatif selon la première direction entre le dispositif de stockage et l'outil d'écriture pour empêcher, après engagement, l'outil d'écriture d'être écarté du dispositif de stockage dans la deuxième direction.

L'invention sera mieux comprise à la lecture de la description faite ci-après en référence aux dessins annexés sur lesquels :
- la figure 1 est une vue générale très schématique d'une machine à dessiner ;
- la figure 2 est une vue plus détaillée, en élévation et partiellement en coupe, montrant le dispositif de stockage et une partie de la tête d'écriture de la machine de la figure 1 pour illustrer le procédé de changement d'outil d'écriture selon l'invention ;
- la figure 3 est une vue de dessus du dispositif de stockage de la figure 2 ; et
- les figures 4A et 4B sont des vues partielles de détail à échelle agrandie montrant un outil d'écriture respectivement avant engagement dans un logement du dispositif de stockage et après engagement.

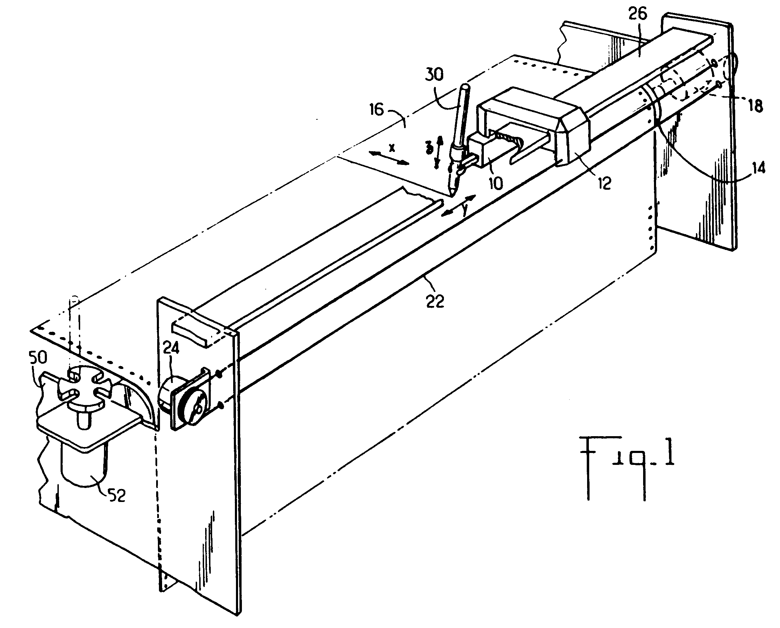

La figure 1 montre schématiquement une partie d'une machine à dessiner comportant, de façon connue en soi, une tête d'écriture 10 montée sur un chariot 12 et portant un outil d'écriture 30 et un tambour 14 sur lequel passe un support d'impression tel qu'une feuille de papier 16.

Le tambour 14 est entraîné en rotation au moyen d'un moteur 18 dont l'arbre de sortie est par exemple couplé directement à l'axe du tambour 14. La rotation du tambour dans un sens ou dans l'autre provoque le déplacement longitudinal de la feuille 16 vers l'avant ou vers l'arrière suivant une direction X. La solidarisation entre le tambour 14, et la feuille 16 est réalisée par exemple au moyen de picots portés par le tambour et coopérant avec des perforations formées le long des bords de la feuille ou au moyen de galets presseurs appliquant la feuille sur le tambour.

La tête d'écriture 10 est mobile en translation suivant une direction horizontale transversale Y, parallèle à l'axe du tambour 14 et perpendiculaire à la direction X. A cet effet, le chariot 12 est par exemple solidaire d'un ruban, ou câble 22 entraîne dans un sens ou dans l'autre par un moteur 24. Pendant son déplacement, le chariot 12 est guidé le long d'une ou plusieurs glissières 26.

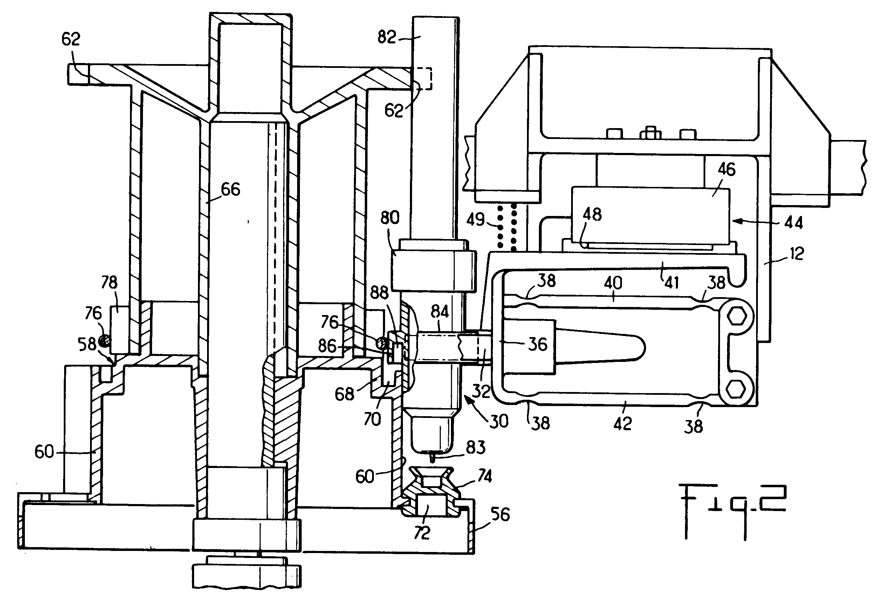

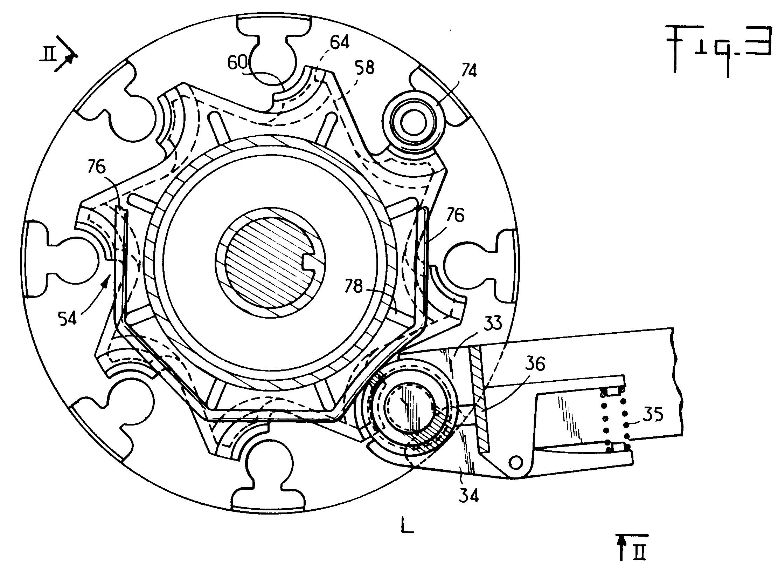

L'outil d'écriture 30 est mobile selon une direction Z par rapport à la feuille 16 entre une position de travail (position abaissée) dans laquelle la pointe de l'outil d'écriture est rapprochée de la feuille 16, et une position de repos (position relevée) dans laquelle la pointe de l'outil d'écriture est éloignée de la feuille 16. En position abaissée, l'outil d'écriture est en contact avec la feuille 16 dans une zone d'écriture située parallèlement et à proximité de la génératrice supérieure du tambour 14 ou le long de cette génératrice. Différents moyens d'actionnement peuvent être utilisés pour faire passer l'outil d'écriture de sa position relevée à sa position abaissée, ou inversement. Un mode particulier de réalisation de ces moyens d'actionnement est décrit plus loin en référence aux figures 2 et 3.

Enfin, sur la figure 1, est également représenté de façon très schématique un magasin rotatif ou barillet 50 à la périphérie duquel sont formés plusieurs logements pour le stockage d'outils d'écriture, afin de permettre un changement automatique de l'outil d'écriture porté par la tête. Le changement est effectué en amenant la tête d'écriture 10 dans une position de transfert adjacente au barillet 50, cette position correspondant à une des deux extrémités de la course de la tête d'écriture. Le barillet 50 est mobile en rotation sous l'action d'un moteur 52 pour présenter, face à la tête d'écriture en position de transfert, soit un logement libre devant recevoir l'outil porté par la tête, soit un logement occupé par un outil à transférer sur la tête.

La tête d'écriture 10 en position de transfert portant un outil d'écriture 30 et un barillet 50 permettant la mise en oeuvre du procédé selon l'invention sont illustrés de façon détaillée par les figures 2 et 3.

La fixation de l'outil d'écriture sur la tête 10 est réalisée au moyen d'une pince 32 fixée sur le corps 36 de la tête 10. La pince 32 a une mâchoire fixe 33 solidaire du corps de tête 36 et une mâchoire 34 articulée sur le corps de tête. Un ressort 35 exerce une force de rappel sur la mâchoire articulée 34 afin d'enserrer le corps de l'outil d'écriture entre les mâchoires 33 et 34 et d'empêcher tout mouvement relatif entre l'outil d'écriture 30 et la pince 32 pendant toutes les opérations d'écriture.

Dans l'exemple illustré, les mouvements d'abaissement et de relèvement de l'outil d'écriture sont réalisés par déformation réversible du corps de tête 36, comme décrit dans la demande de brevet français No. 87 05 116 au nom de la demanderesse. En bref, le corps de tête est réalisé en une seule pièce, par exemple par moulage d'une matière plastique telle qu'un polypropylène, sous forme d'un parallélogramme élastiquement déformable. la capacité de déformation du corps de tête est obtenue en formant des amincissements 38 sur des bras de liaison 40, 42 qui relient la partie avant du corps de tête 36 portant la pince 32 à la partie arrière du corps de tête 36 fixée rigidement au chariot 12.

Les déformations du corps de tête 36 provoquant les mouvements d'abaissement et de relèvement de l'outil d'écriture sont provoquées par un actionneur 44 agissant directement sur le corps de tête, en l'espèce sur un bras 41 solidaire de la partie avant du corps de tête 36. L'actionneur 44 est par exemple du type électromagnétique avec un ensemble 46 porté par le chariot 12 et formé d'une pièce plane en fer doux sur laquelle sont fixés deux aimants permanents, et une bobine 48 mobile verticalement dans le champ créé par l'ensemble 46 en réponse à l'établissement d'un courant dans la bobine. Selon le sens du courant qui la parcourt, la bobine 48, qui est solidaire du bras 41, est déplacée vers le bas pour déformer le corps de tête afin d'amener l'outil d'écriture en position abaissée, ou vers le haut afin d'amener l'outil d'écriture en position relevée. Un ressort de traction 49 exerce une force de rappel sur le corps de tête pour ramener l'outil d'écriture en position relevée lorsque la machine n'est pas sous tension. Dans la mesure où le ressort 49 est choisi pour juste équilibrer le poids de la tête d'écriture portant l'outil, afin de ne pas agir en cours d'écriture, il est préférable d'utiliser l'actionneur pour ramener l'outil en position relevée, ceci afin d'assurer un relevage rapide et précis de l'outil.

Bien entendu, d'autres modes de réalisation de la tête d'écriture pourront être adoptés.

Par exemple, il est possible d'utiliser un corps de pince rigide portant l'outil d'écriture par l'intermédiaire d'une pince telle que celle 32 montrée sur les figures 2 et 3 et articulé sur le chariot 12. L'abaissement et le relèvement de l'outil d'écriture sont alors réalisés en faisant pivoter le corps de pince dans un sens ou dans l'autre par tout moyen approprié de type mécanique, électromécanique ou électromagnétique, par exemple un électroaimant.

Selon encore une autre variante, il est possible d'utiliser une tête d'écriture telle que décrite dans la demande de brevet français No. 2 572 572 déjà citée. L'outil d'écriture est solidarisé à la tête d'écriture par une force d'attraction magnétique produite par un aimant permanent et s'exerçant sur le corps de l'outil d'écriture. L'outil d'écriture est maintenu appliqué latéralement contre des galets portés par la tête d'écriture et les mouvements d'abaissement et de relèvement de l'outil d'écriture sont provoqués en déplaçant celui-ci par rapport à la tête au moyen d'une force électromagnétique s'exerçant sur le corps de l'outil d'écriture en complément de la force d'attraction magnétique de maintien latérale de l'outil contre la tête.

Quels que soient les moyens utilisés pour provoquer les mouvement d'abaissement et de relèvement de l'outil d'écriture, ceux-ci sont utilisés pour engager l'outil d'écriture dans un logement du barillet 50 ou dégager un outil d'écriture de son logement.

Comme le montrent les figures 2 et 3, le barillet 50 comprend un corps de barillet à la périphérie duquel sont formés plusieurs logements 54 chacun destiné à recevoir un outil d'écriture en position verticale (figure 2). Sur la figure 3, seul l'outil d'écriture 30 porté par la tête en position de transfert est visible, les autres outils d'écriture stockés sur le barillet 50 n'étant pas représentés.

Le corps de barillet comprend une embase horizontale circulaire 56 au centre de laquelle s'élève un noyau vertical 58 couplé en rotation à l'arbre de sortie du moteur 52 d'entraînement du barillet.

Les logements 54 sont constitués par des renfoncements réguliàrement répartis à la périphérie du noyau 58 et adjacents les uns aux autres. Dans l'exemple illustré, les logements sont au nombre de huit.

Dans chaque logement 54, sont formées des surfaces verticales d'appui ou de butée 60, 62 pour le corps de l'outil d'écriture. Une surface d'appui 60 est formée à la partie inférieure du logement par la paroi extérieure 64 du noyau 58 et fait légèrement saillie à l'intérieur du logement. La surface d'appui 60 est à section en arc-de-cercle dont la courbure correspondant à celle de la partie du corps de l'outil d'écriture destinée à venir en appui sur la surface 60. La surface de butée 62 est formée à la partie supérieure du logement pour coopérer avec la partie supérieure de l'outil d'écriture.

Dans l'exemple illustré, la partie supérieure du barillet est constituée par une pièce 66 (non représentée sur la figure 3), par exemple une pièce moulée en matière plastique fixée sur le noyau 58. Les surfaces de butée 62 sont formées par des nervures faisant saillie vers l'extérieur dans chaque logement, au sommet de la pièce 66.

Dans chaque logement 54, la paroi extérieure 64 du noyau 58 se raccorde, à sa partie supérieure, à la partie centrale du même noyau 58 par un décrochement horizontal 68 dans lequel est réalisé un premier moyen d'accrochage formé par une gouttière ou rainure 70 à section méridienne en forme de U s'ouvrant vers le haut. La rainure 70 s'étend horizontalement sur un même arc-de-cercle que la section droite de la surface d'appui 60, tout en étant en retrait par rapport à celle-ci.

Des trous 72 sont formés dans l'embase 56 du barillet, chaque trou 72 étant verticalement aligné avec l'emplacement d'un outil d'écriture dans un logement 54.

Des capuchons 74 (non tous représentés), par exemple en caoutchouc, sont insérés à force dans les trous 72 pour y être fixés. Chaque capuchon 74 s'ouvre vers le haut de manière à recevoir la pointe d'un outil d'écriture afin de la protéger.

Le barillet est enfin muni d'un ressort bracelet 76 entourant le noyau 58 pour maintenir les outils d'écriture dans les rainures 70 et dans les capuchons 74 comme expliqué ci-après. Le ressort 76 s'appuie sur des projections 78 formées à la périphérie du noyau 58 (figure 3).

Le corps de l'outil d'écriture 30 est formé par une pièce tubulaire 80 constituant un porte-outil dans lequel est inséré l'organe d'écriture 82 proprement dit, ce dernier étant consommable. Le porte-outil 80 présente un deuxième moyen d'accrochage formé par une partie 84 en forme de collerette avec un rebord extérieur 86 vertical dirigé vers le bas pour former une gouttière ou rainure 88 s'ouvrant vers le bas.

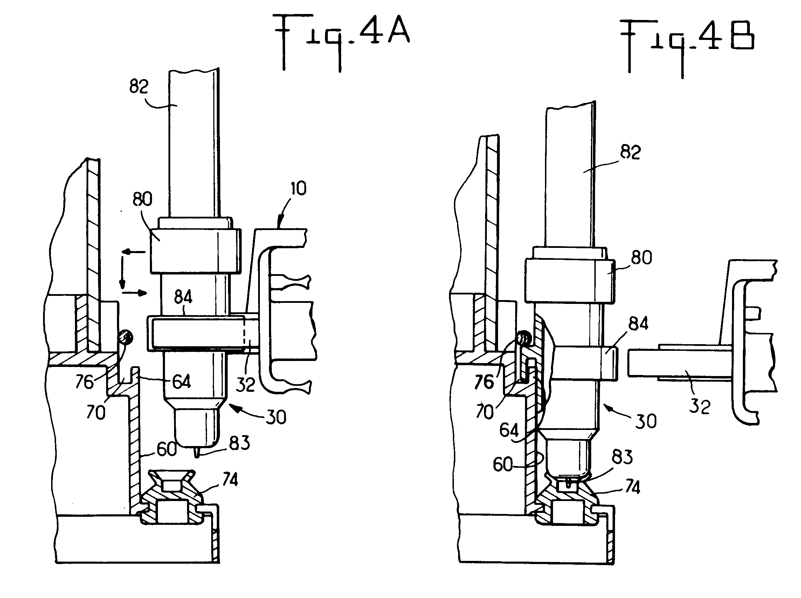

Les figures 4A et 4B montrent un outil d'écriture 30 respectivement avant et après engagement dans un logement du barillet.

La tête d'écriture portant l'outil 30 est amenée vers la position de transfert avec l'outil 30 dans une position verticale intermédiaire haute (figure 4A). La tête est déplacée jusqu'à ce que l'outil 30 vienne en butée contre les surfaces 60, 62 du logement dans lequel il doit être déposé, la pince fixe repoussant vers l'intérieur du barillet le ressort bracelet 76. Comme on le voit sur la figure 4A, l'outil étant en position de transfert haute, la collerette 84 du porte-outil 80 peut passer au-dessus du rebord supérieur du support 64, tandis que la pointe 83 de l'organe d'écriture peut passer au-dessus du bord du capuchon 74.

Lorsque l'outil est venu en butée contre la surface d'appui 60, l'abaissement de l'outil d'écriture est commandé. Par ce mouvement d'abaissement, le rebord extérieur de la collerette 84 pénètre dans la rainure 70 tandis que, simultanément, la pointe 83 de l'organe d'écriture 82 pénètre dans le capuchon 74 comprimant en fin de course le capuchon 74. Ainsi, par simple commande d'abaissement d'outil, on provoque simultanément l'accrochage du porte-outil 80 sur le support 64 du barillet et l'insertion de la pointe de l'organe d'écriture dans le capuchon de protection 74.

Lorsque l'outil est en position abaissée dans le logement du barillet, un déplacement de la tête d'écriture est commandée pour éloigner celle-ci du barillet. L'outil d'écriture étant accroché sur son support par la collerette 84, l'éloignement de la tête d'écriture provoque l'ouverture de la pince 32 à l'encontre de la force exercée par le ressort 35. L'outil d'écriture est ainsi dégagé automatiquement de la tête. Le ressort 76 qui est venu se placer au-dessus de la collerette 84 maintient l'outil d'écriture dans la rainure 70 et dans le capuchon 74 (figure 4B).

Le prélèvement d'un outil d'écriture dans un logement du barillet pour son transfert sur la tête d'écriture est réalisé par le processus inverse.

La tête d'écriture est amenée en position de transfert avec la pince 32 dans une position verticale intermédiaire basse. Par le déplacement de la tête d'écriture, la pince 32 vient au contact de la collerette de l'outil d'écriture et son ouverture est forcée à l'encontre du ressort 35 pour saisir l'outil. On notera que la saisie du corps de l'outil par la pince se situe au niveau de la collerette 84. Comme on peut le voir sur la figure 3, le profil des logements 54 est choisi pour que la saisie du corps de l'outil par la pince ne soit pas gênée par une interférence entre les mâchoires de la pince et le noyau du barillet, bien que les mâchoires enserrent le corps de l'organe d'écriture sur un arc supérieur à 180 degrés. De ce fait, il est notamment nécessaire que l'arc le long duquel s'étendent les surfaces s'appui 60 et les rainures 70 soit inférieur à l'arc laissé libre sur le corps de l'outil d'écriture entre les extrémités des mâchoires de la pince 32. Au cours de ce mouvement, la machoire fixe de la pince repousse vers l'intérieur le ressort 76.

Lorsque le corps de l'outil a été saisi par la pince, le mouvement de relèvement d'outil est commandé pour dégager la collerette 84 de la rainure 70 et dégager la pointe de l'organe d'écriture du capuchon 74. L'outil étant en position relevée, il suffit ensuite de déplacer la tête pour l'éloigner du barillet.

Comme le montre la figure 4B, le ressort bracelet 76 exerce une poussée vers le bas et vers l'extérieur sur chaque outil d'écriture stocké sur le barillet, à un niveau légèrement supérieur à celui de la collerette 84. Par l'effet de cette poussée, l'outil d'écriture, en équilibre vertical entre le ressort 76 et la poussée élastique ascendante du capuchon 74, est maintenu dans la rainure 70 ce qui permet aux outils d'écriture de conserver dans les logements 54 des positions fixes précisément définies. De la sorte, la saisie par la tête d'écriture amenée en position de transfert du corps de l'outil d'écriture situé dans le logement amené en regard de la tête est toujours effectuée parfaitement. De plus, le maintien des outils d'écriture sur le barillet par le ressort 76 est suffisant pour permettre la manipulation du barillet 50, après l'avoir dégagé de l'arbre du moteur 52, sans que les outils d'écriture stockés se séparent du barillet.

D'autres moyens que le ressort bracelet peuvent être utilisés pour maintenir les outils d'écriture en position dans les logements du dispositif de stockage, par exemple des moyens exerçant une force d'attraction magnétique, comme des aimants permanents agissant sur le corps des outils d'écriture.

Selon le mode de réalisation de l'invention qui vient d'être décrit, l'engagement de l'outil d'écriture dans un logement du barillet et son dégagement sont réalisés respectivement par les mouvements d'abaissement et de relèvement d'outil. Bien qu'il s'agisse là d'un mode de réalisation préféré, d'autres formes de mouvement relatif vertical entre le dispositif de stockage et l'outil pourraient être utilisées. Ainsi, la possibilité de réaliser l'engagement de l'outil dans un logement du barillet par le mouvement de relèvement d'outil, et le dégagement par le mouvement inverse d'abaissement n'est pas exclue, si des moyens adaptés de liaison entre le barillet et les outils d'écriture sont prévus.

## Revendications

1. Procédé de transfert d'outil d'écriture dans une machine graphique comprenant un dispositif de stockage de type barillet une tête d'écriture munie de moyens de fixation d'un outil d'écriture amovible, l'outil d'écriture porté par la tête d'écriture pouvant être déplacé dans une première direction (Z) entre une position de travail rapprochée d'un support d'impression et une position de repos, éloignée du support d'impression, et la tête d'écriture étant déplaçable dans une deuxième direction par rapport au support d'impression pour tracer sur celui-ci des motifs graphiques prédéterminés au moyen d'un outil d'écriture porté par la tête, le transfert d'un outil d'écriture de la tête d'écriture au dispositif de stockage, ou inversement, étant réalisé en amenant la tête d'écriture dans la deuxième direction au voisinage du dispositif de stockage,
caractérisé en ce que le transfert d'un outil d'écriture de la tête d'écriture au dispositif de stockage et son engagement dans un logement libre du dispositif de stockage, ainsi que le dégagement d'un outil d'écriture d'un logement du dispositif de stockage et son transfert à la tête d'écriture, sont réalisés chacun seulement par une combinaison d'un mouvement relatif selon la première direction entre le dispostif de stockage et l'outil d'écriture et déplacement selon la deuxième direction de la tête d'écriture.

2. Procédé selon la revendication 1, caractérisé en ce que le transfert d'un outil d'écriture de la tête d'écriture à un logement libre du dispositif de stockage est réalisé par amenée en position de transfert de la tête d'écriture portant l'outil d'écriture, engagement de l'outil d'écriture dans le logement du dispositif de stockage par un mouvement d'abaissement d'outil, et dégagement de l'outil d'écriture de la tête d'écriture par déplacement de celle-ci, selon la deuxième direction, hors de la position de transfert, et le transfert d'un outil d'écriture d'un logement du dispositif de stockage à la tête d'écriture est réalisé par engagement de l'outil d'écriture sur la tête d'écriture par amenée de celle-ci en position de transfert, dégagement de l'outil d'écriture de son logement du dispositif de stockage par un mouvement de relèvement d'outil, et déplacement de la tête d'écriture selon la deuxième direction hors de la position de transfert.

3. Procédé selon la revendication 2, caractérisé en ce que l'engagement d'un outil d'écriture dans un logement du dispositif de stockage est réalisé par accrochage de l'outil d'écriture sur le dispositif de stockage, ledit accrochage étant effectué par engagement mutuel de moyens d'accrochage formés sur l'outil d'écriture et le dispositif de stockage lors du mouvement d'abaissement d'outil.

4. Procédé selon l'une quelconque des revendications 2 et 3, caractérisé en ce que l'on réalise l'insertion de la pointe de l'outil d'écriture dans un capuchon de protection associé à chaque logement du dispositif de stockage, et le retrait hors du capuchon par les mêmes mouvements d'abaissement ou de relèvement d'outils qui sont effectués pour engager l'outil d'écriture dans le logement du dispositif de stockage ou pour le dégager de ce logement.

5. Machine graphique comportant une tête d'écriture (10) munie de moyens (32) de fixation d'un outil d'écriture (30) amovible ; des moyens d'actionnement (44) pour déplacer l'outil d'écriture, porté par la tête d'écriture selon une première direction entre une position de travail rapprochée d'un support d'impression (16) et une position de repos, éloignée du support d'impression ; des moyens (24) de déplacement de la tête d'écriture par rapport au support d'impression selon une deuxième direction pour tracer sur celui-ci des motifs graphiques prédéterminés au moyen de l'outil d'écriture porté par la tête ; et un dispositif (50) de stockage d'outil d'écriture de type barillet comportant des logements (54) dans chacun desquels peut être stocké un outil d'écriture et agencé de manière à permettre le transfert d'un outil d'écriture entre un quelconque logement du dispositif de stockage et la tête d'écriture lorsque celle-ci est amenée dans une position de transfert adjacente audit logement,
caracterisée en ce que le machine graphique est munie de moyens pour réaliser le transfert d'un outil d'écriture de la tête d'écriture au dispositif de stockage et son engagement dans un logement libre du dispositif de stockage, ainsi que pour le dégagement d'un outil d'écriture d'un logement du dispositif de stockage et son transfert à la tête d'écriture chaque par seulement une combinaison d'un mouvement relatif selon la première direction entre le dispositif de stockage et l'outil d'écriture et déplacement selon la deuxième direction de la tête d'écriture.

6. Machine selon la revendication 5, caracterisée en ce que chaque logement (54) du dispositif de stockage et chaque outil d'écriture (30) sont respectivement munis d'un premier et d'un deuxième moyen d'accrochage (70, 84) adaptés à être engagés l'un dans l'autre par un mouvement relatif selon la première direction entre le dispositif de stockage (50) et l'outil d'écriture (30) pour empêcher, après engagement, l'outil d'écriture d'être écarté du dispositif de stockage dans la deuxième direction.

7. Machine selon l'une quelconque des revendications 5 et 6, caractérisée en ce que chaque logement (54) du dispositif de stockage (50) comporte un capuchon (74) fixe par rapport au dispositif de stockage et disposé de manière à permettre l'insertion d'une pointe d'un outil d'écriture (30) dans le capuchon simultanément avec l'engagement l'un dans l'autre des moyens d'accrochage.

8. Machine selon l'une quelconque des revendications 5 à 7, caractérisée en ce que le deuxième moyen d'accrochage comprend une collerette (84) formée sur l'outil d'écriture et le premier moyen d'accrochage comprend une rainure (70) formée dans chaque logement (54) du dispositif de stockage, l'accrochage de l'outil sur le dispositif de stockage étant réalisé par introduction de la collerette (84) dans la rainure (70).

9. Machine selon l'une quelconque des revendications 5 à 8, caractérisée en ce que le dispositif de stockage (50) comprend des moyens (76) pour exercer en permanence sur les outils d'écriture disposés dans les logements une force tendant à maintenir engagés l'un dans l'autre les premiers et deuxièmes moyens d'accrochage.

10. Barillet rotatif pour le stockage d'outils d'écriture, destiné à la mise en oeuvre du procédé selon la revendication 1, ledit barillet comprenant une pluralité de logements à sa périphérie, caractérisé en ce que chaque logement (54) comprend un premier moyen d'accrochage adapté à recevoir un deuxième moyen d'accrochage d'un outil d'écriture engagé lors d'un mouvement relatif selon la première direction entre le barillet et l'outil d'écriture pour empêcher, après engagement, l'outil d'écriture de s'éloigner du barillet dans la deuxième direction.

11. Barillet selon le revendication 10, caractérisé en ce que le premier moyen d'accrochage comprend une rainure (70) ouverte vers le haut dans laquelle est engagée une collerette (84) d'un outil d'écriture par un mouvement d'abaissement de l'outil d'écriture.

12. Barillet selon la revendication 11, caractérisé en ce que chaque logement comprend un capuchon fixe (74) dans lequel une pointe d'outil d'écriture peut être insérée lors du mouvement d'abaissement de l'outil d'écriture.

13. Barillet selon l'une quelconque des revendications 10 à 12, caractérisé en ce qu'il comprend des moyens (76) pour exercer en permanence sur les outils d'écriture disposés dans les logements une force tendant à maintenir engagés l'un dans l'autre les moyens d'accrochage.

14. Barillet selon la revendication 13, caractérisé en ce que lesdits moyens exerçant une force sur les outils d'écriture comprennent un ressort (76) entourent le barillet (50).

15. Barillet selon la revendication 14, caractérisé en ce qu'il ne comporte pas de pièce mobile autre que le ressort (76).

16. Outil d'écriture pour la mise en oeuvre du procédé selon la revendication 1, ledit outil étant adapté à être stocké sur un dispositif de stockage de machine graphique ayant une pluralité de logements à sa périphérie, chaque logement ayant une rainure (70) d'accrochage, caractérisé en ce que l'outil d'écriture comporte une collerette (84) ayant une partie en saillie adaptée à être engagée dans la rainure (70) lorsque l'outil d'écriture est déplacé, par rapport au dispositif d'accrochage, parallèlement à la direction longitudinale de l'outil d'écriture.

## Claims

1. Process for transferring the writing implement in a graphics machine comprising a storage apparatus of the cylinder type, a writing head provided with fixing means for a removable writing implement, the writing implement carried by the writing head being able to be displaced in a first direction (Z) between a working position in contact with a writing support and a rest position spaced from the writing support, and the writing head being displaceable in a second direction with respect to the writing support in order to trace on this predetermined graphics patterns by means of a writing implement carried by the head, the transfer of a writing implement from the writing head to the storage apparatus or the other way round being effected by leading the writing head in the second direction into the neighbourhood of the storage apparatus,
characterised in that the transfer of a writing implement from the writing head to the storage apparatus and its engagement in a free receptacle of the storage apparatus, as well as the disengagement of a writing implement from a receptacle of the storage apparatus and its transfer to the writing head, are effected in each case solely by a combination of a relative movement along the first direction between the storage apparatus and the writing implement and displacement in the second direction of the writing head.

2. Process according to claim 1, characterised in that the transfer of a writing implement from the writing head to a free receptacle of the storage apparatus is effected by leading into the transfer position the writing head carrying the writing implement, engagement of the writing implement in the receptacle of the storage apparatus by a lowering movement of the implement and disengagement of the writing implement from the writing head by displacement of this in the second direction out of the transfer position and the transfer of a writing implement from a receptacle of the storage apparatus to the writing head is effected by engagement of the writing implement on the writing head by leading this into the transfer position, disengagement of the writing implement from its receptacle in the storage apparatus by a raising movement of the implement and displacement of the writing head in the second direction out of the transfer position.

3. Process according to claim 2, characterised in that the engagement of a writing implement in a receptacle of the storage apparatus is effected by hooking the writing implement on the storage apparatus, the said hooking being effected by mutual engagement of hooking means formed on the writing implement and the storage apparatus during the lowering movement of the implement.

4. Process according to any one of claims 2 and 3, characterised in that one effects the insertion of the point of the writing implement into a protection cap associated with each receptacle of the storage apparatus and the withdrawal out of the cap by the same movements of lowering or of raising the implement which are made to engage the writing implement in the receptacle of the storage apparatus or for disengaging it from this receptacle.

5. Graphics machine comprising a writing head (10) provided with means (32) for fixing a removable writing implement (30); actuating means (44) to displace the writing implement carried by the writing head in a first direction between a working position in contact with a writing support (16) and a rest position spaced from the writing support ; means (24) for displacing the writing head with respect to the writing support in a second direction in order to trace on this predetermined graphics patterns by means of the writing implement carried by the head ; and a storage apparatus (50) for the writing implement of the cylinder type comprising receptacles (54) in each of which a writing implement can be stored and arranged in such a fashion as to permit the transfer of a writing implement between any one of the receptacles of the storage apparatus and the writing head when this is led into a transfer position adjacent to the said receptacle characterised in that the graphics machine is provided with means for effecting the transfer of a writing implement from the writing head to the storage apparatus and its engagement in a free receptacle of the storage apparatus as well as for the disengagement of a writing implement from a receptacle of the storage apparatus and its transfer to the writing head in each case solely by a combination of a relative movement in the first direction between the storage apparatus and the writing implement and displacement of the writing head in the second direction.

6. Machine according to claim 5, characterised in that each receptacle (54) of the storage apparatus and each writing implement (30) are respectively provided with a first and a second engagement means (70, 84) adapted to be engaged one in the other by a relative movement in the first direction between the storage apparatus (50) and the writing implement (30) in order to prevent after engagement the writing implement being spaced from the storage apparatus in the second direction.

7. Machine according to any one of claims 5 and 6, characterised in that each receptacle (54) of the storage apparatus (50) comprises a cap (74) fixed with reference to the storage apparatus and disposed in such a fashion as to permit the insertion of a point of a writing implement (30) into the cap simultaneously with the engagement of the engagement means one into the other.

8. Machine according to any one of claims 5 to 7, characterised in that the second engagement means comprises a small collar (84) formed on the writing implement and the first engagement means comprises a groove (70) formed in each receptacle (54) of the storage apparatus, the engagement of the implement on the storage apparatus being effected by introduction of the small collar (84) into the groove (70).

9. Machine according to any one of claims 5 to 8, characterised in that the storage apparatus (50) comprises means (76) to exert permanently on the writing implements disposed in the receptacles a force tending to maintain the first and second engagement means engaged one in the other.

10. Rotary cylinder for the storage of writing implements for putting into practice the process according to claim 1, the said cylinder comprising a plurality of receptacles on its periphery, characterised in that each receptacle (54) comprises a first engagement means adapted to receive a second engagement means of a writing implement engaged during a relative movement in the first direction between the cylinder and the writing implement in order to prevent, after engagement, the writing implement being separated from the cylinder in the second direction.

11. Cylinder according to claim 10, characterised in that the first engagement means comprises an upwardly open groove (70) in which is engaged a small collar (84) of a writing implement by a lowering movement of the writing implement.

12. Cylinder according to claim 11, characterised in that each receptacle comprises a fixed cap (74) into which a point of a writing implement can be inserted during the lowering movement of the writing implement.

13. Cylinder according to any one of claims 10 to 12, characterised in that it comprises means (76) permanently to exert on the writing implements located in the receptacles a force tending to maintain the engagement means engaged one in the other.

14. Cylinder according to claim 13, characterised in that the said means exerting a force on the writing implements comprises a spring (76) surrounding the cylinder (50).

15. Cylinder according to claim 14, characterised in that it comprises no movable part other than the spring (76).

16. Writing implement for putting into effect the process according to claim 1, the said implement being adapted to be stored in a storage apparatus of a graphics machine having a plurality of receptacles at its periphery, each receptacle having an engagement groove (70), characterised in that the writing implement comprises a small collar (84) having a projecting portion adapted to be engaged in the groove (70) when the writing implement is displaced with reference to the engagement means parallel to the longitudinal direction of the writing implement.

## Patentansprüche

1. Verfahren zur Übergabe eines Schreibwerkzeugs in einer graphischen Maschine mit einer trommelartigen Speichereinrichtung, einem mit Mitteln zur Befestigung eines auswechselbaren Schreibwerkzeugs versehenen Schreibkopf, wobei das durch den Schreibkopf gehaltene Schreibwerkzeug in einer ersten Richtung (Z) zwischen einer einem Aufzeichnungsträger angenäherten Arbeitsstellung und einer von dem Aufzeichnungsträger abgerückten Ruhestellung beweglich ist und der Schreibkopf in bezug auf den Aufzeichnungsträger in einer zweiten Richtung bewegbar ist, um mit Hilfe des an dem Kopf gehaltenen Schreibwerkzeugs vorbestimmte graphische Motive auf den Aufzeichnungsträger zu zeichnen, bei dem zur Übergabe des Schreibwerkzeugs von dem Schreibkopf an die Speichereinrichtung oder umgekehrt der Schreibkopf in der zweiten Richtung in die Nähe der Speichereinrichtung gebracht wird,
dadurch **gekennzeichnet,** daß die Übergabe eines Schreibwerkzeugs von dem Schreibkopf an die Speichereinrichtung und das Einsetzen des Schreibwerkzeugs in eine freie Aufnahme der Speichereinrichtung sowie das Lösen eines Schreibwerkzeugs aus einer Aufnahme der Speichereinrichtung und seine Übergabe an den Schreibkopf jeweils ausschließlich durch eine Kombination einer Relativbewegung in der ersten Richtung zwischen der Speichereinrichtung und dem Schreibwerkzeug und Bewegung des Schreibkopfes in der zweiten Richtung erfolgt.

2. Verfahren nach Anspruch 1, dadurch **gekennzeichnet,** daß die Übergabe eines Schreibwerkzeugs von dem Schreibkopf zu einer freien Aufnahme der Speichereinrichtung dadurch erfolgt, daß der Schreibwerkzeug tragende Schreibkopf in die Übergabeposition gebracht wird, das Schreibwerkzeug durch eine Absenkbewegung desselben in die Aufnahme der Speichereinrichtung eingesetzt wird und das Schreibwerkzeug von dem Schreibkopf gelöst wird, indem letzterer in der zweiten Richtung aus der Übergabeposition herausbewegt wird, und daß die Übergabe eines Schreibwerkzeugs von einer Aufnahme der Speichereinrichtung an den Schreibkopf dadurch erfolgt, daß das Schreibwerkzeug in den Schreibkopf eingesetzt wird, indem letzterer in die Übergabeposition bewegt wird, das Schreibwerkzeug durch eine Anhebbewegung des Schreibwerkzeugs aus seiner Aufnahme in der Speichereinrichtung gelöst wird und der Schreibkopf in der zweiten Richtung aus der Übergabeposition herausbewegt wird.

3. Verfahren nach Anspruch 2, dadurch **gekennzeichnet,** daß das Einsetzen eines Schreibwerkzeugs in eine Aufnahme der Speichereinrichtung durch Einhängen des Schreibwerkzeugs an der Speichereinrichtung erfolgt, indem an dem Schreibwerkzeug und an der Speichereinrichtung ausgebildete Aufhängemittel bei der Absenkbewegung des Werkzeugs miteinander in Eingriff gebracht werden.

4. Verfahren nach einem der Ansprüche 2 und 3, dadurch **gekennzeichnet,** daß das Einsetzen der Spitze des Schreibwerkzeugs in eine jeder Aufnahme der Speichereinrichtung zugeordnete Schutzkappe und das Herausziehen aus der Schutzkappe durch die selben Absenk- und Anhebbewegungen des Werkzeugs erfolgen, die zum Einsetzen des Schreibwerkzeugs in die Aufnahme der Speichereinrichtung oder zum Lösen desselben aus der Aufnahme ausgeführt werden.

5. Graphische Maschine mit einem Schreibkopf (10), der mit Mitteln (32) zur Befestigung eines auswechselbaren Schreibwerkzeugs (30) versehen ist, Antriebsmitteln (44) zum Bewegen des an dem Schreibkopf gehaltenen Schreibwerkzeugs in einer ersten Richtung zwischen einer einem Aufzeichnungsträger (16) angenäherten Arbeitsstellung und einer von dem Aufzeichnungsträger abgerückten Ruhestellung, Mitteln (24) zum Bewegen des Schreibkopfes in bezug auf den Aufzeichnungsträger in einer zweiten Richtung, um auf demselben vorbestimmte graphische Motive mit Hilfe des an dem Schreibkopf gehaltenen Schreibwerkzeugs aufzuzeichnen, und mit einer trommelartigen Speichereinrichtung (50) für Schreibwerkzeuge, die Aufnahmen (54) aufweist, in denen jeweils ein Schreibwerkzeug aufbewahrt werden kann, und die so ausgebildet ist, daß die Übergabe eines Schreibwerkzeugs zwischen einer beliebigen Aufnahme der Speichereinrichtung und dem Schreibkopf möglich ist, wenn letzterer in eine der genannten Aufnahme benachbarte Übergabeposition gebracht wurde,
dadurch **gekennzeichnet,** daß die graphische Maschine mit Mitteln versehen ist, die die Übergabe eines Schreibwerkzeugs von dem Schreibkopf zur der Speichereinrichtung und das Einsetzen des ersteren in eine freie Aufnahme der Speichereinrichtung sowie das Lösen eines Schreibwerkzeugs aus einer Aufnahme der Speichereinrichtung und die Übergabe desselben an den Schreibkopf jeweils allein durch eine Kombination einer Relativbewegung zwischen der Speichereinrichtung und dem Schreibwerkzeug in der ersten Richtung und Bewegung des Schreibkopfes in der Zweiten Richtung ermöglichen.

6. Maschine nach Anspruch 5, dadurch **gekennzeichnet,** daß jede Aufnahme (54) der Speichereinrichtung und jedes Schreibwerkzeug (30) jeweils mit einem ersten bzw. einem zweiten Aufhängemittel (70, 84) versehen sind, die dazu eingerichtet sind, durch Relativbewegung der Speichereinrichtung (50) und des Schreibwerkzeugs (30) in der ersten Richtung miteinander in Eingriff gebracht zu werden, so daß nach dem Eingriff ein Ablösen des Schreibwerkzeugs von der Speichereinrichtung in der zweiten Richtung verhindert wird.

7. Maschine nach einem der Ansprüche 5 und 6, dadurch **gekennzeichnet,** daß jede Aufnahme (54) der Speichereinrichtung (50) eine in bezug auf die Speichereinrichtung feste Kappe (74) aufweist, die so angeordnet ist, daß sie das Einstecken einer Spitze eines Schreibwerkzeugs (30) in die Kappe gleichzeitig mit dem Ineingriffbringen der Aufhängemittel gestattet.

8. Maschine nach einem der Ansprüche 5 bis 7, dadurch **gekennzeichnet,** dass das zweite Aufhängemittel einen an dem Schreibwerkzeug ausgebildeten Kragen (84) umfast und dass das erste Aufhängemittel eine in jeder Aufnahme (54) der Speichereinrichtung ausgebildete Rille (70) umfast, wobei das Einhängen des Schreibwerkzeugs an der Speichereinrichtung durch Einführen des Kragens (84) in die Rille (70) erfolgt.

9. Maschine nach einem der Ansprüche 5 bis 8, dadurch **gekennzeichnet,** daß die Speichereinrichtung (50) mit Mitteln (76) versehen ist, die auf die in den Aufnahmen abgesetzten Schreibwerkzeuge permament eine Kraft ausüben, die die Tendenz hat, die ersten und zweiten Aufhängemittel miteinander in Eingriff zu halten.

10. Drehbare Trommel für die Aufbewahrung von Schreibwerkzeugen, zur Durchführung des Verfahrens nach Anspruch 1, bei der die genannte Trommel an ihrem Umfang mehrere Aufnahmen aufweist, dadurch **gekennzeichnet,** daß jede Aufnahme (54) ein erstes Aufhängemittel aufweist, das dazu eingerichtet ist, ein zweites Aufhängemittel an einem Schreibwerkzeug aufzunehmen, das bei einer Relativbewegung zwischen der Trommel und dem Schreibwerkzeug in der ersten Richtung in Eingriff gebracht wird, so daß nach dem Ineingriffbringen ein Ablösen des Schreibwerkzeugs von der Trommel in der zweiten Richtung verhindert wird.

11. Trommel nach Anspruch 10, dadurch **gekennzeichnet,** daß die ersten Aufhängemittel eine nach oben offene Rille (70) aufweisen, in die bei einer Absenkbewegung des Schreibwerkzeugs ein Kragen (84) des Schreibwerkzeugs eingreift.

12. Trommel nach Anspruch 11, dadurch **gekennzeichnet,** daß jede Aufnahme eine feste Kappe (74) aufweist, in die bei der Absenkbewegung des Schreibwerkzeugs eine Spitze des Schreibwerkzeugs einführbar ist.

13. Trommel nach einem der Ansprüche 10 bis 12, dadurch **gekennzeichnet,** daß sie Mittel (76) aufweist, die auf die in den Aufnahmen angebrachten Schreibwerkzeuge permament eine Kraft ausüben, die die Tendenz hat, die Aufhängemittel miteinander in Eingriff zu halten.

14. Trommel nach Anspruch 13, dadurch **gekennzeichnet,** daß die genannten Mittel zum Ausüben einer Kraft auf die Schreibwerkzeuge eine die Trommel (50) umgebende Feder (76) aufweisen.

15. Trommel nach Anspruch 14, dadurch **gekennzeichnet,** daß sie außer der Feder (76) keine beweglichen Teile aufweist.

16. Schreibwerkzeug zur Durchführung des Verfahrens nach Anspruch 1, welches Schreibwerkzeug dazu eingerichtet ist, in einer an ihrem Umfang mit mehreren Aufnahmen versehenen Speichereinrichtung einer graphischen Maschne aufbewahrt zu werden, wobei jede Aufnahme eine Aufhänge-Rille (70) aufweist, dadurch **gekennzeichnet,** daß das Schreibwerkzeug einen Kragen (84) mit einem vorspringenden Teil aufweist, der dazu eingerichtet ist, mit der Rille (70) in Eingriff zu treten, wenn das Schreibwerkzeug in bezug auf das Aufhängemittel parallel zur Längsrichtung des Schreibwerkzeugs bewegt wird.
